# EUROPEAN PATENT SPECIFICATION

(11) **EP 0 984 149 B1**
(45) Date of publication and mention of the grant of the patent: **22.12.2004**
(21) Application number: 99117065.5
(22) Date of filing: 30.08.1999
(51) Int. Cl.: F02F 1/42, F02B 31/08

(54) **Cylinder head structure in internal combustion engine**
Zylinderkopfstruktur einer Brennkraftmaschine
Structure d'une culasse pour un moteur à combustion interne

(30) Priority: 31.08.1998 JP 24540298
(43) Date of publication of application: 08.03.2000
(73) Proprietor: HONDA GIKEN KOGYO KABUSHIKI KAISHA, Minato-ku, Tokyo (JP)
(72) Inventor: Hara, Ikurou, c/o Honda R & D Co.,Ltd., Wako-shi, Saitama (JP); Kanda, Tomohiro, c/o Honda R & D Co.,Ltd., Wako-shi, Saitama (JP); Kobayashi, Shinichi, c/o Honda R & D Co.,Ltd., Wako-shi, Saitama (JP)
(74) Representative: Prechtel, Jörg, Dipl.-Phys. Dr.

(56) References cited:
- EP-A- 0 554 235
- EP-A- 0 634 571
- GB-A- 2 052 632

## Description

### BACKGROUND OF THE INVENTION

### 1. Field of the Invention

The present invention relates to a cylinder head structure in an internal combustion engine having counterflow-type intake and exhaust ports.

### 2. Description of the Related Art

Among internal combustion engines, one having counterflow-type intake and exhaust systems is well known in which intake ports and exhaust ports are collectively provided on the same side of a cylinder head which is joined to a deck surface of a cylinder block (refer to Japanese Patent Examined Publication No. 14092/1993).

With the above-described internal combustion engine having counterflow-type intake and exhaust ports, there is an advantage in that the transverse width of the cylinder head, i.e., the width in the direction perpendicular to the axis of a crankshaft, can be reduced. However, since technical means has not been provided for reducing the length in the axial direction of the crankshaft, and the degree of freedom of routing two intake ports communicating with two intake valve openings is small, there is a problem in that it is difficult to provide layout for securing desired intake performance of the intake ports, and a desired swirl characteristic cannot be obtained in a case where the intake ports are formed as swirl ports.

The present invention has been devised in view of the above-described circumstances, and its object is to provide a novel cylinder head structure in an internal combustion engine which is capable of enhancing the degree of freedom in routing the intake ports to provide desired layout thereof while making the cylinder head compact, which is capable of preventing as practically as possible a boundary wall of two intake ports from becoming thin-walled even if they are juxtaposed in close proximity to each other, and which excels in the swirl performance by permitting free layout of the swirl port.

To attain the above-object, according to the present invention, there is provided a cylinder head structure in an internal combustion engine having counterflow-type intake and exhaust ports wherein the intake and exhaust ports formed in a cylinder head and communicating with an internal combustion chamber are disposed in a concentrated manner in one side of the cylinder head in such a manner as to be directed in an identical direction, and upstream ends of the intake and exhaust ports are open in one side surface of the cylinder head, wherein, in a combustion chamber wall formed in the cylinder head, a first intake valve opening on a side which is farther from the one side surface of the cylinder head and a second intake valve opening which is closer than the same are open in a juxtaposed manner along a direction perpendicular to an axis of a crankshaft; a first intake port and a second intake port formed in the cylinder head are formed vertically in two stages respectively independently and their center lines cross each other, the first intake port being located at a position higher than the second intake port and being formed to be longer than the same, the first intake port having a downstream end communicating with the first intake valve opening, the second intake port being located at a position lower than the first intake port and being formed to be shorter than the same, the second intake port having a downstream end communicating with the second intake valve opening, upstream ends of the first intake port and the second intake port being open in the one side surface of the cylinder head. According to the above-described structure, it is possible to make the cylinder head compact by reducing the dimensions of the cylinder head in the axial direction of the crankshaft and in the direction perpendicular to that axial direction, and it is possible to improve the intake efficiency by increasing the degree of freedom in routing the two intake ports. Further, it is possible to prevent as practically as possible a boundary wall of two intake ports from becoming thin-walled even if they are juxtaposed in close proximity to each other.

In addition, to attain the above object, in the above cylinder head structure in an internal combustion engine, the downstream end of the first intake port is directed in a circumferential direction of the combustion chamber, and constitutes a swirl port. Accordingly, the intake port can be made long in its overall length as a swirl port and permits free routing, thereby making it possible to produce a high swirl ratio.

### BRIEF DESCRIPTION OF DRAWINGS

Fig. 1 is a side elevational view, viewed from the direction of arrow I in Fig. 2, of a cylinder head;
Fig. 2 is a plan view, viewed from the direction of arrow II in Fig. 1, of the cylinder head;
Fig. 3 is a bottom view, viewed from the direction of arrow III in Fig. 1, of the cylinder head;
Fig. 4 is a horizontal cross-sectional view, taken along line IV - IV in Fig. 1, of the cylinder head;
Fig. 5 is a vertical cross-sectional view, taken along line V - V in Fig. 2, of the cylinder head;
Fig. 6 is a vertical cross-sectional view, taken along line VI - VI in Fig. 2, of the cylinder head;
Fig. 7 is a vertical cross-sectional view, taken along line VII - VII in Fig. 2, of the cylinder head;
Fig. 8 is a vertical cross-sectional view, taken along line VIII - VIII in Fig. 2, of the cylinder head;
Fig. 9 is a vertical cross-sectional view, taken along line IX - IX in Fig. 2, of the cylinder head;
Fig. 10 is a fragmentary vertical cross-sectional view, taken along line X - X in Fig. 2, of the cylinder head;
Fig. 11 is a schematic perspective view illustrating the positional relationship among intake ports and exhaust ports; and
Fig. 12 is a diagram illustrating the flow of cooling water.

### DETAILED DESCRIPTION OF THE PREFERRED EMBODIMENT

Hereafter, a description will be given of an embodiment of the present invention with reference to the appended drawings.

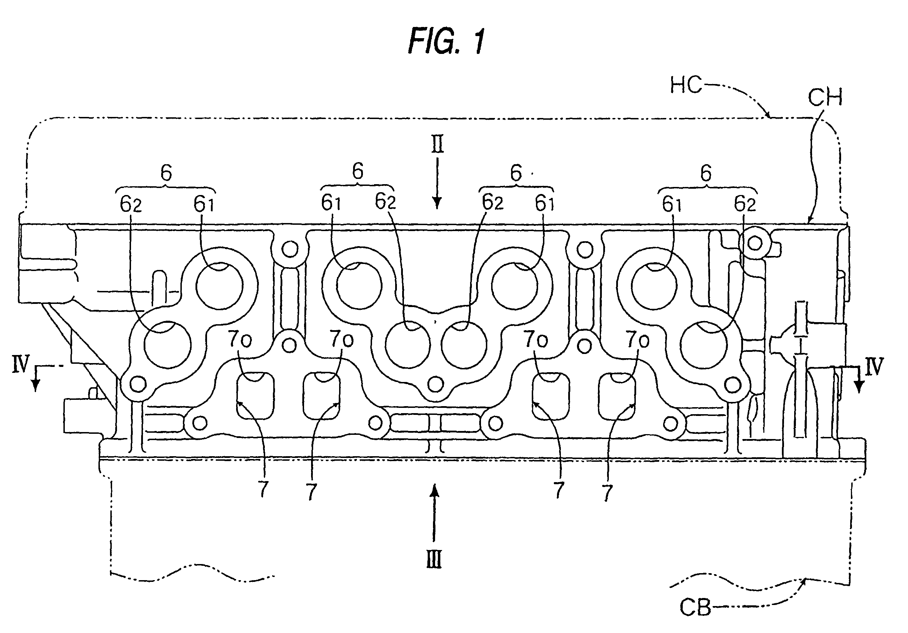

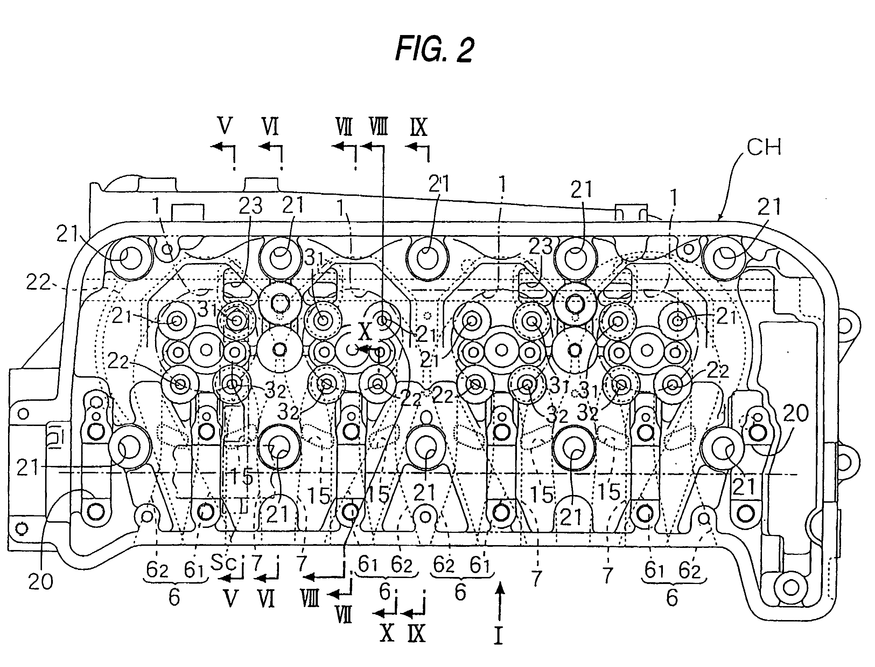

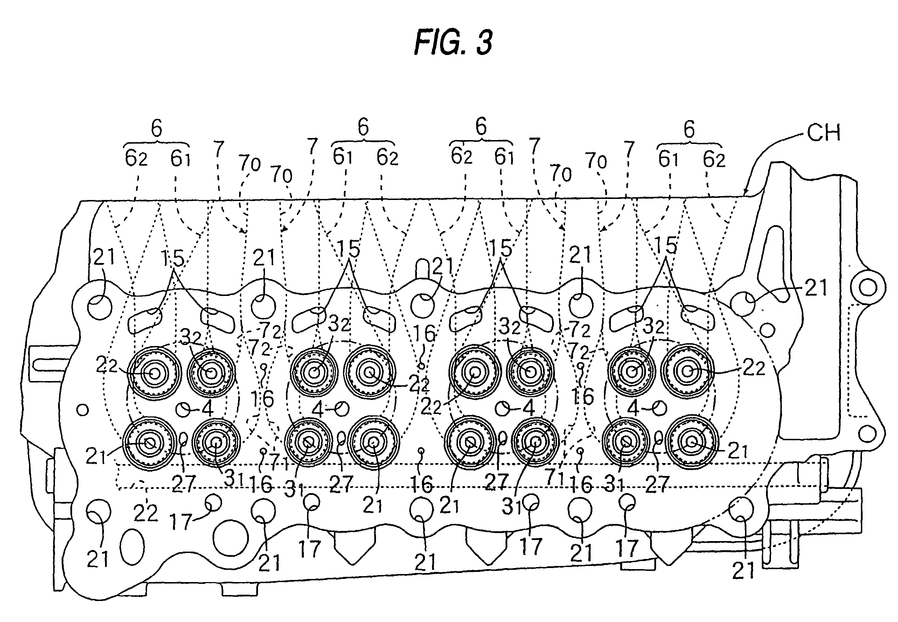

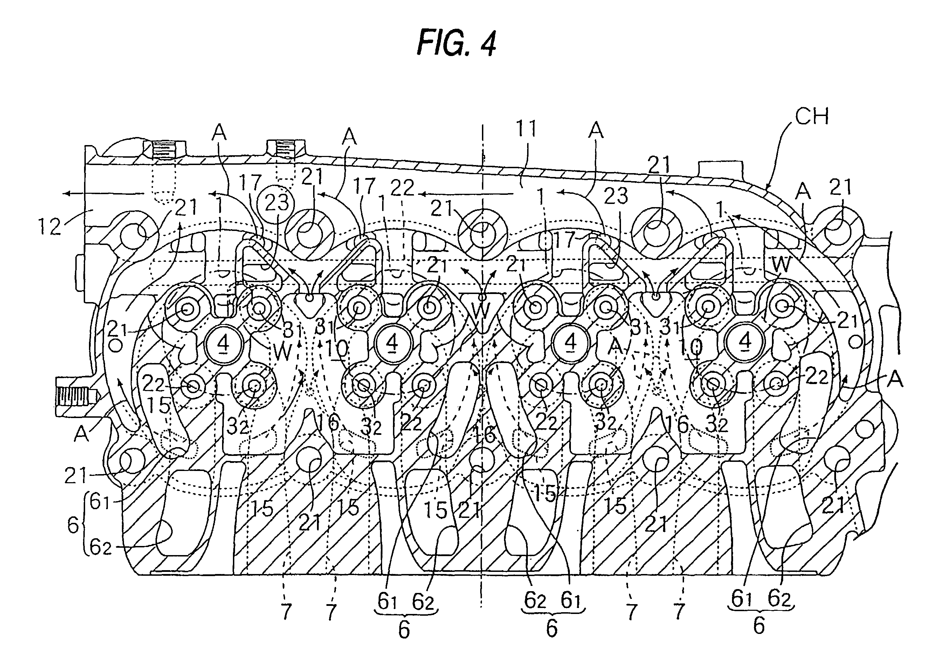

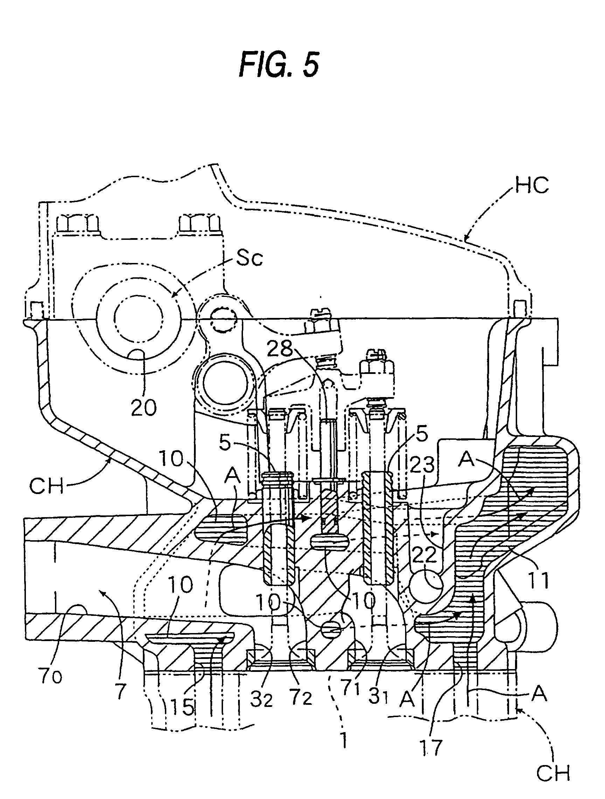

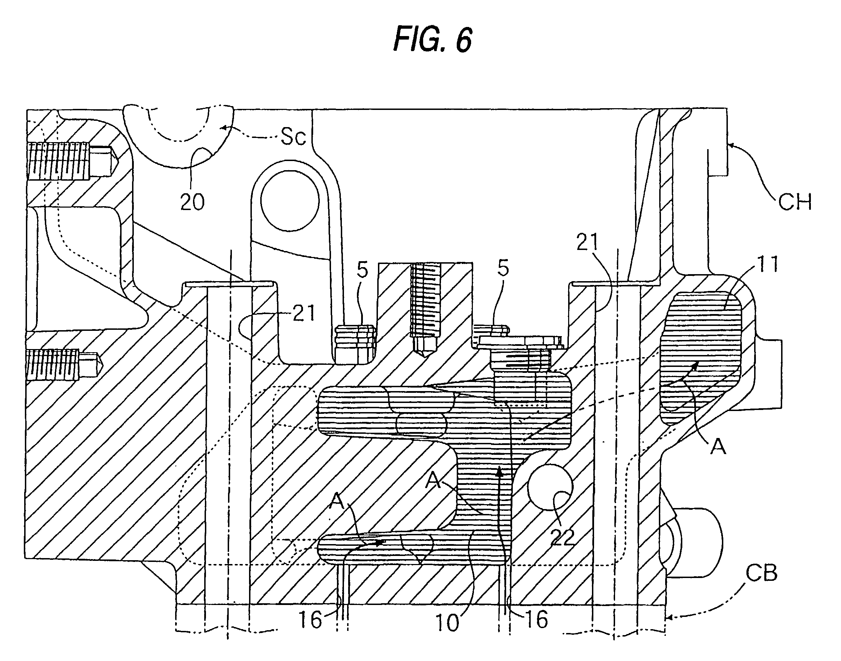

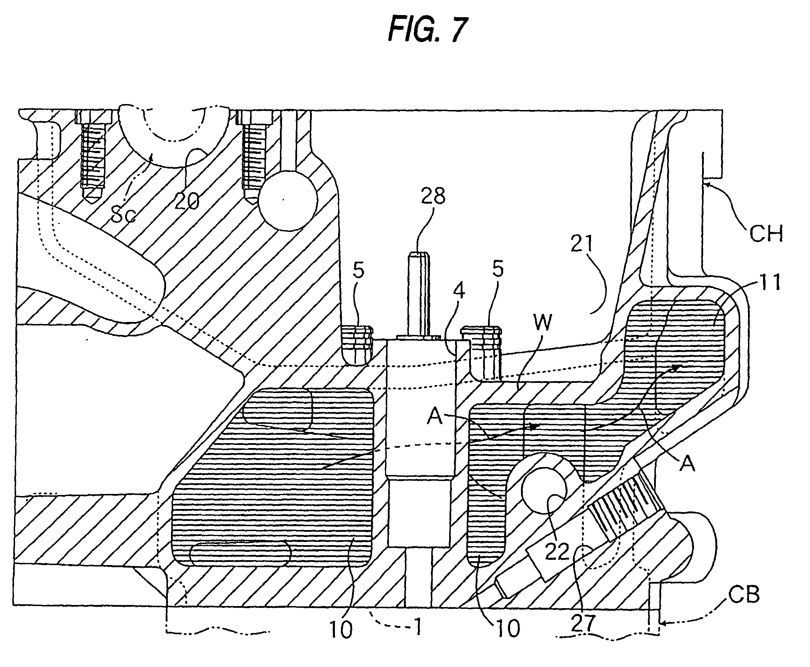

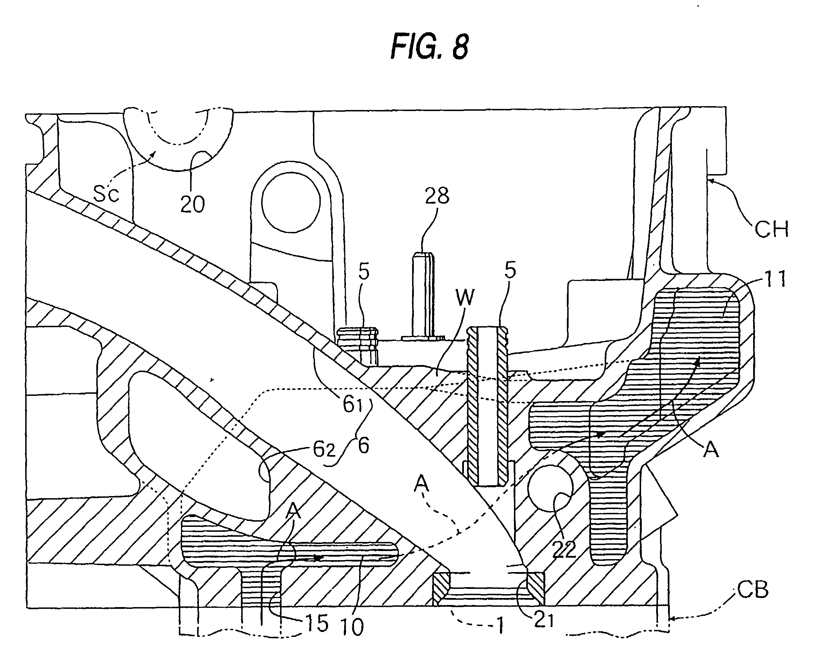

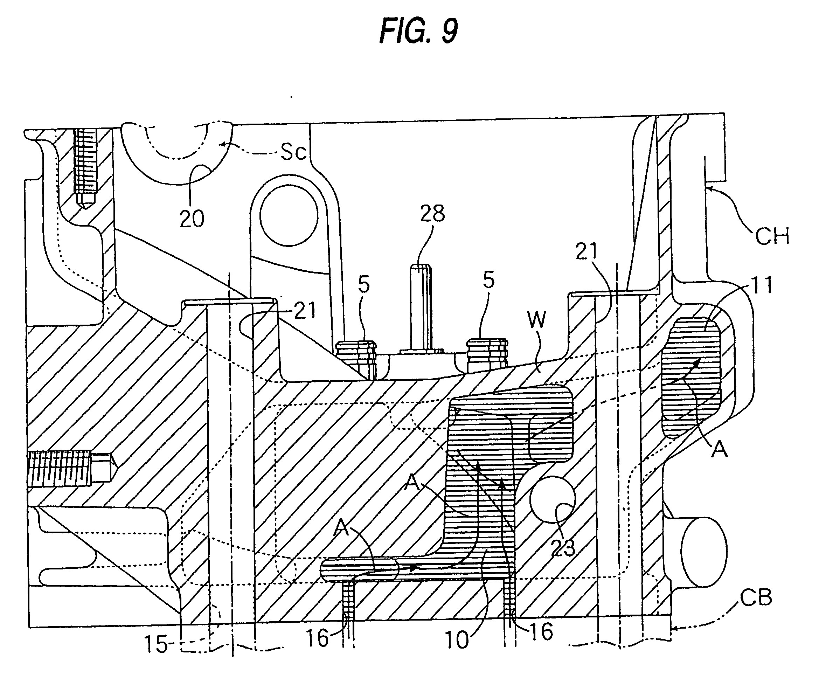

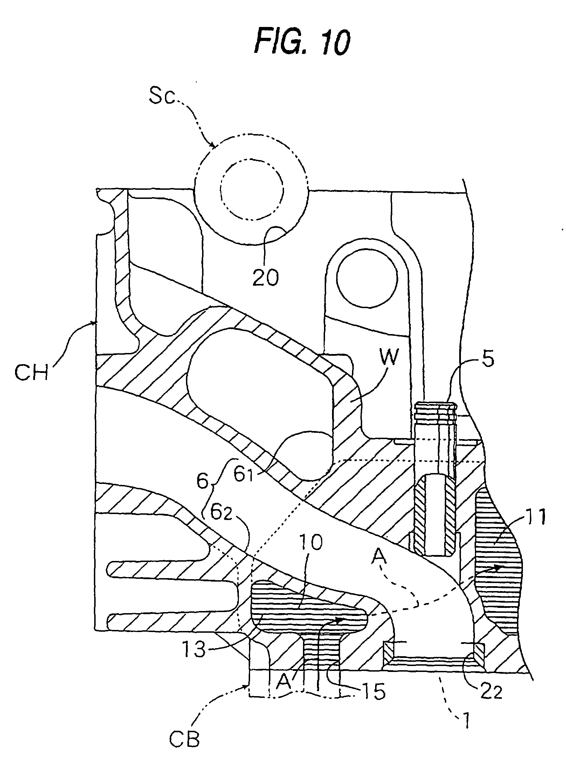

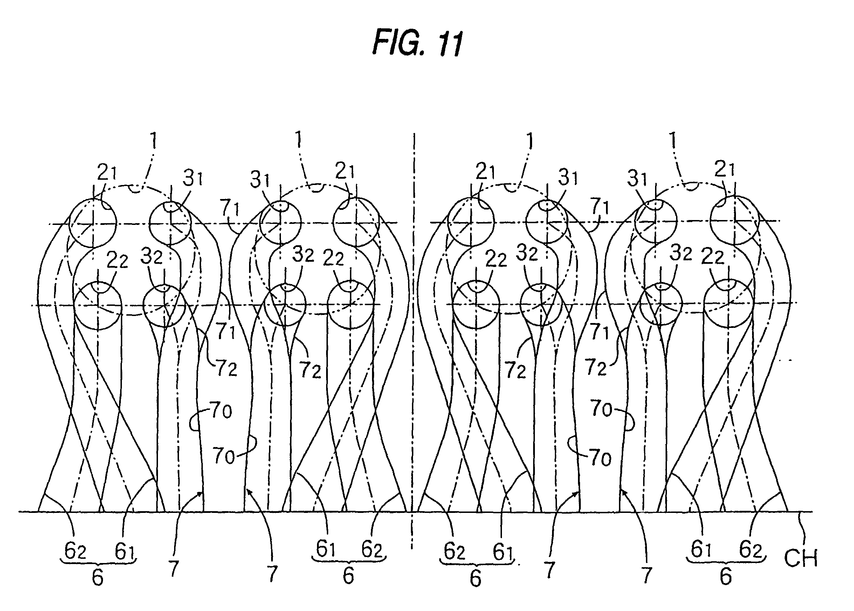

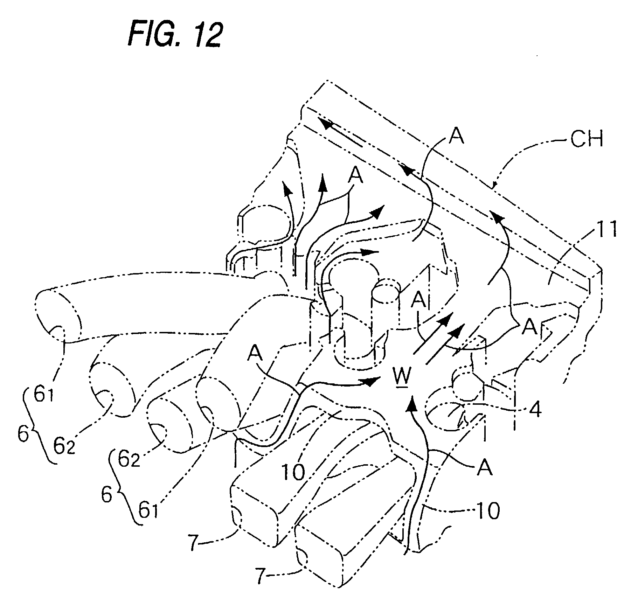

This embodiment shows an example in which the present invention is implemented in a straight-type four-cylinder four-stroke cycle diesel engine. Fig. 1 is a side elevational view, viewed from the direction of arrow I in Fig. 2, of a cylinder head; Fig. 2 is a plan view, viewed from the direction of arrow II in Fig. 1, of the cylinder head; Fig. 3 is a bottom view, viewed from the direction of arrow III in Fig. 1, of the cylinder head; Fig. 4 is a horizontal cross-sectional view, taken along line IV - IV in Fig. 1, of the cylinder head; Fig. 5 is a vertical cross-sectional view, taken along line V - V in Fig. 2, of the cylinder head; Fig. 6 is a vertical cross-sectional view, taken along line VI - VI in Fig. 2, of the cylinder head; Fig. 7 is a vertical cross-sectional view, taken along line VII - VII in Fig. 2, of the cylinder head; Fig. 8 is a vertical cross-sectional view, taken along line VIII - VIII in Fig. 2, of the cylinder head; Fig. 9 is a vertical cross-sectional view, taken along line IX - IX in Fig. 2, of the cylinder head; Fig. 10 is a fragmentary vertical cross-sectional view, taken along line X - X in Fig. 2, of the cylinder head; Fig. 11 is a schematic perspective view illustrating the positional relationship among intake ports and exhaust ports; and Fig. 12 is a diagram illustrating the flow of cooling water.

A cylinder head CH is joined to a deck surface of a cylinder block CB by means of a gasket, and a head cover HC is fitted to the cylinder head CH by means of packing. The cylinder head CH is formed of a metallic material such as Fe by casting and is formed in a rectangular shape in a plan view. On the underside of the cylinder block CB which faces cylinder bores, four combustion chambers 1 are formed in a straight row along its longitudinal direction, i.e., along the axial direction of a crankshaft. First and second intake valve openings 2₁ and 2₂ and first and second exhaust valve openings 3₁ and 3₂ are respectively open on at an upper wall of each combustion chamber 1 in such a manner as to be juxtaposed in a transverse direction of the cylinder head CH, i.e., in a direction perpendicular to the axial direction of the crankshaft. The first intake valve opening 2₁ is located on a side which is farther from one side surface of the cylinder head CH where outer ends of exhaust ports 6 and 7, which will be described later, are open, while the second intake valve opening 2₂ is on a side which is closer to that side surface. Similarly, the first exhaust valve opening 3₁ is located on the side which is farther from that side surface of the cylinder head CH, while the second exhaust valve opening 3₂ is on the side which is closer to that side surface.

The first and second intake valve openings 2₁ and 2₂ and the first and second exhaust valve openings 3₁ and 3₂ are opened and closed by first and second intake valves and first and second exhaust valves in the ordinary manner. In addition, an injection valve fitting hole 4 which passes through this upper wall is provided in a central portion of the upper wall of each combustion chamber 1, and an fuel injection valve (not shown) is detachably fitted in this fitting hole 4. Furthermore, hollow cylindrical valve guides 5 are respectively provided penetratingly in the upper wall of the cylinder head CH at substantially central positions on the center lines of the first and second intake valve openings 2₁ and 2₂ and the first and second exhaust valve openings 3₁ and 3₂. The first and second intake valves and the first and second exhaust valves are respectively fitted in these valve guides 5.

As most clearly shown in Figs. 4 and 11, the intake port 6 and the exhaust port 7 are provided in a concentrated manner in the cylinder head CH on one side thereof in a direction of traversing the cylinder head CH, i.e., in a counterflow manner, in correspondence with each combustion chamber 1. Inner ends of the intake port 6 and the exhaust port 7 communicate with the combustion chamber 1. Further, their outer ends are open on one side surface of the cylinder head CH and are respectively made to communicate with and connected to an intake system and an exhaust system (not shown).

The intake port 6 corresponding to each combustion chamber 1 is comprised of a first intake port 6₁ and a second intake port 6₂ which are respectively independent. These first and second intake ports 6₁ and 6₂ are provided in two stages in such a manner as to vertically overlap with each other in the upper wall of the cylinder head CH, and their inner ends are respectively made to communicate with the first and second intake valve openings 2₁ and 2₂.

Meanwhile, the exhaust port 7 corresponding to each combustion chamber 1 is arranged such that upstream-side two first and second branch exhaust ports 7₁ and 7₂ branch off in a bifurcating manner from a midway portion of a downstream-side exhaust port 7₀ which is open in one side surface of the cylinder head CH. The first and second branch exhaust ports 7₁ and 7₂ are respectively made to communicate with the aforementioned first and second exhaust valve openings 3₁ and 3₂.

Next, referring to Figs. 5 to 12, a more detailed description will be given of the arrangement of the first and second intake ports 6₁ and 6₂. The first intake port 6₁ is located at a position higher than the second intake port 6₂, and is formed to be longer than the second intake port 6₂. A central axis of base side of the first intake port 6₁, i.e., its upstream-side portion crosses a central axis of the second intake port 6₂ and extends in the widthwise direction of the cylinder head CH (in a direction perpendicular to the axial direction of the crankshaft). Further, a distal side of the first intake port 6₁, i.e., its downstream-side portion, is curved toward the outer side with respect to the combustion chamber 1 in the axial direction of the crankshaft in such a manner as to detour the second intake valve opening 2₂, and its downstream open end is directed in the circumferential direction of the combustion chamber 1, i.e., in a tangential direction of the combustion chamber 1, and is communicated with and connected to the combustion chamber 1, thereby forming a so-called swirl port. Accordingly, the intake air which flows through the first intake port 6₁, which constitutes the swirl port, flows in the peripheral tangential direction of the combustion chamber 1, and is able to produce a swirl in the intake air which flows into the combustion chamber 1.

On the other hand, the second intake port 6₂ is located at a position lower than the first intake port 6₁, and is formed to be shorter than the same. A center line of an intermediate portion of the second intake port 6₂ crosses the intake port 6₁ at a lower portion of the intake port 6₁ and extends substantially rectilinearly in a direction perpendicular to the axial direction of the crankshaft, and its downstream open end is communicated with and connected to the second intake valve opening 2₂ substantially perpendicularly thereto. The first and second intake ports 6₁ and 6₂ are provided in two stages in such a manner as to vertically overlap with each other in the upper wall of the cylinder head CH, and are able to shorten the horizontal width of the overall intake port 6 in the axial direction of the crankshaft. In addition, even if the first and second intake ports 6₁ and 6₂ are juxtaposed adjacent to each other, since their boundary wall is only a crossing portion, their port walls are not made thin.

Further, an intake port wall W of the intake port 6 comprised of the first and second intake ports 6₁ and 6₂ arranged vertically in two stage forms a vertical guide wall in a direction perpendicular to the axial direction of the crankshaft in the upper wall of the cylinder head CH. This guide wall is adapted to guide the flow of cooling water which flows through cooling water passages 10 which will be described later in detail. The intake air from the intake system flows into the combustion chamber 1 through the first and second intake valve openings 2₁ and 2₂ from the first and second intake ports 6₁ and 6₂. At that time, a swirl is produced in the combustion chamber 1 by the intake air which flows through the first intake port 6₁, as described before, and favorably improves its mixing with the injected fuel, thereby enhancing the efficiency of subsequent combustion of the air-fuel mixture.

On the other hand, the exhaust port 7 is provided in juxtaposition with the first and second intake ports 6₁ and 6₂ with the injection valve fitting hole 4 located therebetween. Further, an inner end portion of the downstream-side exhaust port 7₀ extending straightly in such a manner as to be perpendicular to the axial direction of the crankshaft bifurcates into the first branch exhaust port 7₁ and the second branch exhaust port 7₂ on the upstream side. The first branch exhaust port 7₁ is curved convexly toward the outer side with respect to the combustion chamber 1, and its upstream end is communicated with and connected to the first exhaust valve opening 3₁, while the second branch exhaust port 7₂ is slightly curved toward the outer side with respect to the combustion chamber 1, and its upstream end is communicated with and connected to the second exhaust valve opening 3₂. Accordingly, the exhaust air from the combustion chamber 1 passes through the bifurcated first and second branch exhaust ports 7₁ and 7₂ from the first and second exhaust valve openings 3₁ and 3₂ and is collected in the single exhaust port 7₀, and is exhausted therefrom into the exhaust system.

It should be noted that, as shown in Fig. 1, the open ends of the first and second intake ports 6₁ and 6₂, which are open at one side surface of the cylinder head CH, and the exhaust port 7 overlap with each other in the vertical direction and longitudinal direction of the cylinder head CH, so that the layout of these ports can be facilitated, thereby contributing to making the cylinder head CH compact.

As most clearly shown in Figs. 1, 4, and 11, the intake ports 6 and the exhaust ports 7 corresponding to the two adjacent combustion chambers 1 are arranged to be symmetrical in such a manner as to face each other. By adopting such an arrangement, it is possible to enlarge the volume of the cooling water passages 10 surrounding these ports, particularly the exhaust ports 7 where the temperature becomes high, with the result that cooling by the cooling water can be performed effectively.

The cooling water passages 10 (water jacket) are provided in the cylinder head CH for effectively cooling the cylinder head, particularly the surroundings of the exhaust ports and the combustion chambers 1 which are heated to high temperature. These cooling water passages 10 are arranged such that, as shown by arrows A in the drawings, cooling water effectively cools the surroundings of the exhaust ports 7 and the combustion chambers 1 by flowing in parallel inside the cylinder head CH while being subjected to resistance in the direction of arrangement of the plurality of intake ports 6 and exhaust ports 7, i.e., in a direction perpendicular to the axial direction of the crankshaft, and then flows in the axial direction of the crankshaft through a cooling water outlet passage 11 formed on the other side of the cylinder head CH where the intake and exhaust ports 6 and 7 are not formed.

The cooling water passages (water jackets) 10 formed in the cylinder head CH for effectively cooling heated portions, mainly the surroundings of the exhaust ports 7 and the combustion chambers 1, are formed in the overall region of the cylinder head CH in such a manner as to surround the outer peripheral portions of the respective two exhaust ports 7 facing each other in correspondence with the adjacent ones of the combustion chambers 1 and to surround the fuel injection valves, the first and second intake valves, the first and second exhaust valves and the like in the upper walls of the combustion chambers 1. In addition, these cooling water passages 10 are partitioned in the direction perpendicular to the axial direction of the crankshaft by means of the intake port walls W, extending in the transverse direction of the cylinder head CH, of the first and second intake ports 6₁ and 6₂ arranged vertically in two stages. Hence, the cooling water flowing through the cooling water passages 10 is adapted to be guided inside the cylinder head CH by the intake port walls W from one side toward the other side thereof in the direction perpendicular to the axial direction of the crankshaft. A communicating passage 13 is formed in the intake port wall W below the second intake port 6₂, and the left and right cooling water passages (water jackets) 10 of the suction port 6 are communicated with each other through this communicating passage 13. In addition, as shown in Fig. 8, these cooling water passages 10 are not provided in the upper walls of the first and second intake ports 6₁ and 6₂ formed vertically in two stages, thereby ensuring that the cylinder head CH does not become high.

On the other side of the cylinder head CH where the intake and exhaust ports 6 and 7 are not provided, the cooling water outlet passage 11 is formed along the longitudinal direction of the cylinder head CH. This cooling water outlet passage 11 communicates with the aforementioned cooling water passages (water jackets) 10, and its one end communicates with an efflux port 12 communicating with an cooling water circuit (not shown).

As clearly shown in Figs. 3, 5, and 8, a plurality of cooling water influx ports 15 are open in a bottom wall of the cylinder head CH in such a manner as to be offset on the side having the intake and exhaust ports 6 and 7 with respect to the axis of the crankshaft and to be arranged on the sides of the combustion chambers 1 at intervals in the longitudinal direction of the cylinder head CH. These cooling water influx ports 15 communicate with the cooling water passages (not shown) on the cylinder block CB side and the aforementioned cooling water passages 10, and the cooling water on the cylinder block CB side passes through these cooling water influx ports 15 and flows into the cooling water passages 10.

It should be noted that, as for the cooling water influx ports 15, it is possible to change the flow rate of the cooling water flowing through the cooling water influx ports 15 by partially changing water holes formed in the gasket interposed between the cylinder block CB and the cylinder head CH.

In addition, as clearly shown in Figs. 3 and 9, two small holes 16 communicating with the cooling water passage (water jacket) 10 between the adjacent ones of the combustion chambers 1 are formed in the bottom wall of the cylinder head CH. The cooling water on the cylinder block CB side is adapted to pass through these small holes 16 and flows into the cooling water passage 10, thereby making it possible to effectively cool heated portions between the cylinders in the cylinder block CB and between the combustion chambers 1 in the cylinder head CH.

Furthermore, as clearly shown in Fig. 3, a plurality of other cooling water influx ports 17 are open in the bottom wall of the cylinder head CH in such a manner as to be offset on the side opposite to the side having the intake and exhaust ports 6 and 7 with respect to the axis of the crankshaft and to be arranged on the sides of boundary portions of the combustion chambers 1 at intervals in the longitudinal direction of the cylinder head CH. These other cooling water influx ports 17 communicate with the water jackets on the cylinder block CB side and the aforementioned cooling water outlet passages 11, and the cooling water on the cylinder block CB side passes through these cooling water influx ports 17 and flows into the cooling water outlet passages 11.

The cooling water on the cylinder block CB side passes through the plurality of cooling water influx ports 15 and flows into the cooling water passages 10. The cooling water which flowed into the cooling water passages 10 is guided by the intake port walls W of the first and second intake ports 6₁ and 6₂ arranged vertically in two stages, and flows in parallel through the cooling water passages in the direction perpendicular to the axial direction of the crankshaft. At that time, the flow of the cooling water in the axial direction of the crankshaft is suppressed by the intake port walls W. Accordingly, the cooling water flowing through the cooling water passages 10 is capable of cooling in a concentrated manner the portions surrounding the exhaust ports 7 and the combustion chambers 1 which are heated to high temperature. Then, the cooling water, which has effectively cooled the heated portions of the cylinder head CH by flowing in parallel through the cooling water passages 10 in the direction perpendicular to the axial direction of the crankshaft, flows through the cooling water outlet passages 11 in the cylinder head in the axial direction of the crankshaft, and then flows to the cooling water circuit outside the cylinder head CH from the efflux port 12.

In addition, since the two exhaust ports 7 corresponding to the two adjacent combustion chambers 1 face each other, it is possible to enlarge the volume of the cooling water passages 10 surrounding these exhaust ports 7. Hence, the exhaust ports 7 can be effectively cooled by the large volume of cooling water which flows therethrough.

On the upper wall of the cylinder head CH where the intake and exhaust ports 6 and 7 are provided, a plurality of bearing half portions 20 are formed at intervals in its longitudinal direction, and a valve camshaft Sc is rotatably supported on these bearing half portions 20. Further, a plurality of bolt through holes 21 are formed in straight rows on both sides in the transverse direction of the cylinder head CH along its longitudinal direction, and the cylinder head CH is integrally joined to the deck surface of the cylinder block CB with a gasket interposed therebetween by means of bolts (not shown) which are inserted in these bolt through holes 21. In addition, on the side of the cylinder head CH where the intake and exhaust ports 6 and 7 are not provided, an oil return passage 22 is formed in its longitudinal direction, and a plurality of oil return holes 23 which are open in the upper surface of the cylinder head CH communicate with this oil return passage 22. Hence, lubricating oil in an upper portion of the cylinder head CH passes through the oil return passage 22 from these oil return holes 23 and is returned to an oil sump (not shown).

It should be noted that, in the drawings, reference numeral 27 denotes a plug fitting hole, and preheating plugs (not shown) which are operated at the time of an engine start are threadedly fitted in these fitting holes 27. In addition, reference numeral 28 in the drawings denotes a guide pin which is provided uprightly on an upper wall above each combustion chamber 1 of the cylinder head CH so as to support a cross head of a valve mechanism (not shown).

Although one embodiment of the present invention has been described above, the present invention is not limited to the embodiment, and various modifications are possible within the scope of the present invention. For example, although in the above-described embodiment a description has been given of the case in which the present invention is applied to the cylinder head of a straight-type four-cylinder diesel engine, it goes without saying that the present invention can be implemented for the cylinder head of another type of internal combustion engine. In addition, although in the above-described embodiment the exhaust ports are arranged such two branch exhaust ports bifurcate from a single exhaust port, each of these exhaust ports may be formed by respectively independent two exhaust ports.

As described above, in the cylinder head in an internal combustion engine having counterflow-type intake and exhaust ports, it is possible to make the cylinder head compact by reducing the dimensions of the cylinder head in the axial direction of the crankshaft and in the direction perpendicular to that axial direction. In addition, it is possible to improve the intake efficiency by increasing the degree of freedom in routing the two intake ports. Further, it is possible to reduce as practically as possible a thin-walled portion which constitutes a boundary wall of the two intake ports even if the two intake ports are juxtaposed in close proximity to each other.

In addition, the intake port permits free routing as the swirl port, and the overall length of the swirl port can be made long, with the result that a high swirl ratio can be produced, thereby making it possible to substantially enhance the swirl effect.

The present disclosure relates to the subject matter contained in Japanese patent application No. Hei.10-245402 filed on August 31, 1998 which is expressly incorporated herein by reference in its entirety.

A first intake port and a second intake port (6₁, 6₂) formed in a cylinder head CH are formed vertically in two stages respectively independently and their center lines cross each other. The first intake port (6₁) is located at a position higher than the second intake port (6₂) and is formed to be longer than the same. The first intake port (6₁) is communicated with an intake valve opening (2₁) on a side which is far from one side surface of the cylinder head, and the second intake port (6₂) is communicated with a second intake valve opening (2₂) which is closer than the same.

## Claims

1. A cylinder head structure in an internal combustion engine, comprising:
counterflow-type intake and exhaust ports (6, 7) communicating with an internal combustion chamber (1) and formed in one side of a cylinder head (CH) in such a manner that said intake and exhaust ports (6, 7) are directed in a substantially identical direction, and an upstream end of said intake port and a downstream end of said exhaust port are open in one side surface of said cylinder head (CH); and
first and second intake valve openings (2₁, 2₂) formed in a chamber wall of said combustion chamber (1) in a juxtaposed manner along a direction perpendicular to an axis of a crankshaft in such a manner that said second intake valve opening (2₂) is disposed close to said one side surface of said cylinder head (CH) relative to said first intake valve opening (2₁),
wherein said intake port (6) comprises:
a first intake port (6₁) formed in said cylinder head (CH) and communicating with said first intake valve opening (2₁) at a downstream end thereof; and
a second intake port (6₂) formed in said cylinder head (CH) and communicating with said second intake valve opening (2₂) at a downstream end thereof, each of said first and second intake ports (6₁, 6₂) having an upstream end being open in said one side surface of said cylinder head (CH),
said first and second intake ports (6₁, 6₂) are partially disposed vertically in two stages respectively independently,
center lines of said first and second intake ports (6₁, 6₂) cross with each other, and
said first intake port (6₁) is located higher than said second intake port (6₂) and is formed to be longer than said second intake port (6₂).

2. The cylinder head structure in an internal combustion engine according to claim 1, wherein the downstream end of said first intake port (6₁) is directed in a circumferential direction of said combustion chamber (1) so that said first intake port (6₁) constitutes a swirl port.

3. The cylinder head structure in an internal combustion engine according to claim 1, further, comprising:
first and second exhaust valve openings (3₁, 3₂) formed in said chamber wall of said combustion chamber (1) in a juxtaposed manner along the direction perpendicular to the axis of the crankshaft in such a manner that said second exhaust valve opening (3₂) is disposed close to said one side surface of said cylinder head (CH) relative to said first exhaust valve opening (3₁),
wherein said exhaust port (7) comprises;
a first branch exhaust port (7₁) formed in said cylinder head (CH) and communicating with said first exhaust valve opening (3₁) at an upstream end thereof;
a second branch exhaust port (7₂) formed in said cylinder head (CH) and communicating with said second exhaust valve opening (3₂) at an upstream end thereof;
a common exhaust port (7₀) communicating with said first and second branch exhaust ports (7₁, 7₂) at an upstream end thereof and having a downstream end being open in said one side surface of said cylinder head (CH),

4. The cylinder head structure in an internal combustion engine according to claim 3, wherein, in said one side surface of said cylinder head (CH), the downstream end of said common exhaust port (7₀) overlaps with the upstream ends of said first and second intake ports (6₁, 6₂) in a longitudinal direction and a vertical direction of said cylinder head (CH).

## Patentansprüche

1. Zylinderkopfstruktur in einem Verbrennungsmotor, umfassend:
Einlass- und Auslasskanäle (6, 7) vom Gegenströmungstyp, welche mit einer Brennkammer (1) in Verbindung stehen und auf einer Seite des Zylinderkopfs (CH) derart gebildet sind, dass die Einlass- und Auslasskanäle (6, 7) in eine im Wesentlichen gleiche Richtung ausgerichtet sind, und ein stromaufwärtiges Ende des Einlasskanals und ein stromabwärtiges Ende des Auslasskanals in eine Seitenfläche des Zylinderkopfs (CH) münden; und
erste und zweite Einlassventilöffnungen (2₁, 2₂), welche in einer Kammerwand der Brennkammer (1) auf eine aneinandergrenzende Art und Weise entlang einer Richtung senkrecht zu einer Achse einer Kurbelwelle derart gebildet sind, dass die zweite Einlassventilöffnung (2₂) bezogen auf die erste Einlassventilöffnung (2₁) nah an der einen Seitenfläche des Zylinderkopfs (CH) angeordnet ist,
wobei der Einlasskanal (6) umfasst:
einen ersten Einlasskanal (6₁), der im Zylinderkopf (CH) gebildet ist und mit der ersten Einlassventilöffnung (2₁) an deren stromabwärtigem Ende in Verbindung steht; und
einen zweiten Einlasskanal (6₂), der im Zylinderkopf (CH) gebildet ist und mit der zweiten Einlassventilöffnung (2₂) an deren stromabwärtigem Ende in Verbindung steht, wobei sowohl der erste als auch der zweite Einlasskanal (6₁, 6₂) ein stromaufwärtiges Ende aufweisen, welches in die eine Seitenfläche des Zylinderkopfs mündet,
wobei der erste und der zweite Einlasskanal (6₁, 6₂) jeweils unabhängig teilweise vertikal in zwei Abschnitten angeordnet sind,
Mittellinien des ersten und des zweiten Einlasskanals (6₁, 6₂) einander kreuzen, und
der erste Einlasskanal (6₁) höher angeordnet ist als der zweite Einlasskanal (6₂) und so gebildet ist, dass er länger ist als der zweite Einlasskanal (6₂).

2. Zylinderkopfstruktur in einem Verbrennungsmotor nach Anspruch 1, wobei das stromabwärtige Ende des ersten Einlasskanals (6₁) in eine Umfangsrichtung der Brennkammer (1) gerichtet ist, so dass der erste Einlasskanal (6₁) einen Verwirbelungskanal bildet.

3. Zylinderkopfstruktur in einem Verbrennungsmotor nach Anspruch 1, ferner umfassend:
erste und zweite Auslassventilöffnungen (3₁, 3₂), welche in der Kammerwand der Brennkammer (1) auf eine aneinandergrenzende Art und Weise entlang einer Richtung senkrecht zu der Achse der Kurbelwelle derart gebildet sind, dass die zweite Auslassventilöffnung (3₂) bezogen auf die erste Auslassventilöffnung (3₁) nah an der einen Seitenfläche des Zylinderkopfs (CH) angeordnet ist,
wobei der Auslasskanal (7) umfasst:
einen ersten Zweig-Auslasskanal (7₁), der im Zylinderkopf (CH) gebildet ist und mit der ersten Auslassventilöffnung (3₁) an einem stromaufwärtigen Ende desselben in Verbindung steht;
einen zweiten Zweig-Auslasskanal (7₂), der im Zylinderkopf (CH) gebildet ist und mit der zweiten Auslassventilöffnung (3₂) an einem stromaufwärtigen Ende desselben in Verbindung steht; und
einen gemeinsamen Auslasskanal (7₀), welcher mit dem ersten und dem zweiten Zweig-Auslasskanal (7₁, 7₂) an einem stromaufwärtigen Ende desselben in Verbindung steht und ein stromabwärtiges Ende aufweist, welches in die eine Seitenfläche des Zylinderkopfs (CH) mündet.

4. Zylinderkopfstruktur in einem Verbrennungsmotor nach Anspruch 3, wobei sich in der einen Seitenfläche des Zylinderkopfs (CH) das stromabwärtige Ende des gemeinsamen Auslasskanals (7₀) mit den stromaufwärtigen Enden des ersten und des zweiten Einlasskanals (6₁, 6₂) in einer Längsrichtung und einer vertikalen Richtung des Zylinderkopfs (CH) überlappt.

## Revendications

1. Structure de culasse dans un moteur à combustion interne, comportant :
des orifices d'admission et d'échappement du type à contre-courant (6, 7) qui communiquent avec une chambre de combustion interne (1) et formés dans un côté d'une culasse (CH) d'une manière telle que lesdits orifices d'admission et d'échappement (6, 7) sont dirigés dans une direction sensiblement identique, et une extrémité amont dudit orifice d'admission et une extrémité aval dudit orifice d'échappement sont ouvertes dans une surface latérale de ladite culasse (CH); et
des première et deuxième ouvertures de soupape d'admission (2₁, 2₂) formées dans une paroi de chambre de ladite chambre de combustion (1) d'une manière juxtaposée le long d'une direction perpendiculaire à un axe d'un vilebrequin d'une manière telle que ladite deuxième ouverture de soupape d'admission (2₂) est disposée près de ladite première surface latérale de ladite culasse (CH) par rapport à ladite première ouverture de soupape d'admission (2₁),
ledit orifice d'admission (6) comportant :
un premier orifice d'admission (6₁) formé dans ladite culasse (CH) et communiquant avec ladite première ouverture de soupape d'admission (2₁) au niveau d'une extrémité aval ; et
un deuxième orifice d'admission (6₂) formé dans ladite culasse (CH) et communiquant avec ladite deuxième ouverture de soupape d'admission (2₂) au niveau d'une extrémité aval, chacun desdits premier et deuxième orifices d'admission (6₁, 6₂) ayant une extrémité amont qui est ouverte dans ladite première surface latérale de ladite culasse (CH),
lesdits premier et deuxième orifices d'admission (6₁, 6₂) étant disposés partiellement verticalement en deux étages d'une matière respectivement indépendante,
des axes desdits premier et deuxième orifices d'admission (6₁, 6₂) se croisant l'un l'autre, et
ledit premier orifice d'admission (6₁) étant disposé plus haut que le deuxième orifice d'admission (6₂) et étant formé afin d'être plus long que ledit deuxième orifice d'admission (6₂).

2. Structure de culasse dans un moteur à combustion interne selon la revendication 1, dans laquelle l'extrémité aval dudit premier orifice d'admission (6₁) est orientée dans une direction circonférentielle de ladite chambre de combustion (1) de telle sorte que ledit premier orifice d'admission (6₁) constitue un orifice à tourbillon.

3. Structure de culasse dans un moteur à combustion interne selon la revendication 1, comportant en outre :
des première et deuxième ouvertures de soupape d'échappement (3₁, 3₂) formées dans ladite paroi de chambre de ladite chambre de combustion (1) d'une manière juxtaposée le long de la direction perpendiculaire à l'axe du vilebrequin d'une manière telle que ladite deuxième ouverture de soupape d'échappement (3₂) est disposée près de ladite première surface latérale de ladite culasse (CH) par rapport à ladite première ouverture de soupape d'échappement (3₁),
ledit orifice d'échappement (7) comportant :
un premier orifice d'échappement d'embranchement (7₁) formé dans ladite culasse (CH) et communiquant avec ladite première ouverture de soupape d'échappement (3₁) au niveau d'une extrémité amont;
un deuxième orifice d'échappement d'embranchement (7₂) formé dans ladite culasse (CH) et communiquant avec ladite deuxième ouverture de soupape 'd'échappement (3₂) au niveau d'une extrémité amont;
un orifice d'échappement commun (7-0) communiquant avec lesdits premier et deuxième orifices d'échappement de raccordement (7₁, 7₂) au niveau d'une extrémité amont et ayant une extrémité aval qui est ouverte dans ladite première surface latérale de ladite culasse (CH).

4. Structure de culasse dans un moteur à combustion interne selon la revendication 3, dans laquelle, dans ladite première surface latérale de ladite culasse (CH), l'extrémité aval dudit orifice d'échappement commun (7-0) chevauche les extrémités amont desdits premier et deuxième orifices d'admission (6₁, 6₂) dans une direction longitudinale et une direction verticale de ladite culasse (CH).
